# EUROPÄISCHE PATENTSCHRIFT

(11) **EP 2 212 078 B1**
(45) Veröffentlichungstag und Bekanntmachung des Hinweises auf die Patenterteilung: **02.03.2016**
(21) Anmeldenummer: 08842258.9
(22) Anmeldetag: 15.10.2008
(51) Int. Cl.: B29B 9/06, B41J 3/54, G06F 3/12

(54) **STRANGGRANULIERUNGSVORRICHTUNG**
STRAND PELLETIZER
DISPOSITIF DE GRANULATION DE JONC DE MATIÈRE

(30) Priorität: 23.10.2007 DE 202007014782 U
(43) Veröffentlichungstag der Anmeldung: 04.08.2010
(73) Patentinhaber: Maag Automatik GmbH, 63762 Großostheim (DE)
(72) Erfinder: FENCHEL, Sven, 64832 Babenhausen/Langstadt (DE); SCHEURICH, Jochen, 63843 Niedernberg (DE)
(74) Vertreter: Puschmann Borchert Bardehle Patentanwälte Partnerschaft mbB
(86) Internationale Anmeldenummer: PCT/EP2008/008727
(87) Internationale Veröffentlichungsnummer: WO 2009/052978

(56) Entgegenhaltungen:
- EP-A- 0 303 166
- DE-A1- 2 218 210
- DE-A1- 2 503 455
- DE-B1- 2 627 263
- JP-A- S61 152 408
- JP-U- S61 152 408
- US-B1- 6 347 932

## Beschreibung

Die Erfindung betrifft eine Vorrichtung zum Granulieren zumindest eines Strangs von zu granulierendem Material mit einer Schneidevorrichtung mit zwei gegeneinander bewegbaren Klingen, zumindest einer Einzugsrolle und einer Strangzufuhrvorrichtung zum Zuführen des Strangs zu der Schneidevorrichtung gemäß dem Oberbegriff des Anspruchs 1.

Generell besteht bei solchen Stranggranulierungsvorrichrungen das Problem, dass es unter bestimmten Bedingungen zu Unregelmäßigkeiten bei der Strangzuführung zu der Schneidevorrichtung kommen kann. Dies kann vor allem bei einem Anfahrvorgang auftreten. Aufgrund des unter Umständen inhomogenen Strangmaterials kann es zu Verklumpungen, Überlagerungen oder Strangabrissen kommen.

Auch machen es herkömmliche Stranggranuliervorrichtungen üblicher Weise erforderlich, dass bei Umrüstung auf verschiedene zu granulierende Materialien aufwendige konstruktive Veränderungen vorgenommen werden müssen, um die Strangführung an das jeweilige Strangmaterial, die jeweilige Strangdicke, die jeweilige Viskosität des Strangmaterials und ähnliches anzupassen.

Die obigen Probleme verhindern des Weiteren eine weitestgehende bzw. vollständige Automatisierung des Betriebs herkömmlicher Stranggranulierungsvorrichtungen, insbesondere einen automatisierten Anfahrbetrieb solcher Vorrichtungen.

Zur Granulierung von Strangmaterial ist eine Vorrichtung aus der DE 2218 210 A1 bekannt, die ein Förderband zur Zuführung eines Granulatstrangs aufweist, welches unmittelbar an eine Schneidvorrichtung anlenkt ist und das Strangmaterial gegen den Einfluss der Schwerkraft zum Granulator befördert. Dadurch kann eine Abkühlung erfolgen, wobei das eingesetzte Kühlwasser entgegen der Schwerkraft von der Einzugsvorrichtung weggeführt wird.

Ferner ist die US 6,347,932 bekannt, welche eine gegenüber der senkrechten abwärtsgerichtete Zuführeinrichtung aufweist und eine Zuführungseinrichtung umfasst, wobei diese um eine Drehachse schwenkbar angeordnet ist. Die Drehachse ist beabstandet von der Einzugsrolle befestigt, damit die Führungseinheit um 180° verschwenkt werden kann, um eine Reparatur oder einen Ersatz der Führungseinheit zu erleichtern.

Die DE 26 27 263 offenbart einen Einzugsmechanismus eines Granulators bei dem das Strangmaterial unter Einfluss der Schwerkraft abwärts gerichtet einer Schneidvorrichtung zugeführt wird, wobei vor der Einzugsrolle ein Sicherheitsschalter vorgesehen ist, welcher in Form einer um eine Drehachse schwenkbaren Führungsplatte ausgebildet ist. Die Drehachse ist beabstandet von der Einzugsrolle angeordnet, damit ein Materialstau vor der Einzugsrolle zu einem verkippen der Schalterplatte unmittelbar vor der Einzugsrolle führt.

Die JP S 61-152408 U offenbart eine Vorrichtung zum Granulieren gemäß dem Oberbegriff des Anspruchs 1 zumindest mit einer Strangzuführvorrichtung zur Zuführung eines Strangs von einem Ausgießer zu einer Schneidvorrichtung. Die dort offenbarte Strangzuführeinrichtung ermöglicht eine Höhenanpassung an den Ausgießer.

Im einleitenden Teil der US-Anmeldung US 2005/0077644 A1 ist verschiedener Stand der Technik aus dem Bereich der Strangführung von zu granulierenden Strängen beschrieben. Dort gezeigt ist z.B. eine nicht verstellbare, mit einem Wasserstrom beaufschlagte Kaskaden-Rutsche oder eine in ihrer Neigung nicht verstellbare senkrechte Strangführungsplatte.

Strängen beschrieben. Dort gezeigt ist z.B. eine nicht verstellbare, mit einem Wasserstrom beaufschlagte Kaskaden-Rutsche oder eine in ihrer Neigung nicht verstellbare senkrechte Strangführungsplatte.

Es ist daher Aufgabe der vorliegenden Erfindung eine Vorrichtung zum Granulieren zumindest eines Strangs von zu granulierendem Material vorzusehen, welche die Nachteile des Standes der Technik überwindet und insbesondere auf konstruktiv einfache Art und Weise einen kostengünstigen Betrieb, eine verbesserte Anpassbarkeit an unterschiedliche Betriebszustände, speziell beim Anfahrvorgang, und gegebenenfalls eine weitestgehende Automatisierung des Betriebs, auch hier insbesondere des Anfahrvorgangs, bietet.

Diese Aufgabe wird erfindungsgemäß gelöst mit einer Vorrichtung mit den Merkmalen gemäß dem Anspruch 1.

Bevorzugte Ausführungsformen der Erfindung sind in dem abhängigen Anspruch definiert.

Die erfindungsgemäße Vorrichtung zum Granulieren zumindest eines Strangs von zu granulierendem Material weist eine Schneidevorrichtung mit zwei gegeneinander bewegbaren Klingen, zumindest eine Einzugsrolle und einer Strangzuführvorrichtung zum Zuführen des Strangs zu der Schneidevorrichtung auf. Erfindungsgemäß ist nach der eigentlichen Strangzuführvorrichtung im Bereich unmittelbar vor der Einzugsrolle und an diese angrenzend, d.h. zwischen der eigentlichen Strangzuführvorrichtung und der Einzugsrolle der Schneidevorrichtung, eine zusätzliche in ihrer Neigung verstellbare und relativ zur Strangzuführvorrichtung bewegbare laschenförmige Justageführung angeordnet, mittels welcher der Winkel, unter welchem der Strang der Einzugsrolle zugeführt ist bzw. zuführbar ist, einstellbar ist. Die Justageführung kann dabei ohne weitere Wasser- bzw. Fluidbeaufschlagung vorgesehen sein. Über die Winkel-Verstellbarkeit ist eine weitestgehende Anpassung an unterschiedliche Betriebszustände, Strangmaterialien, Anfahrvorgänge und ähnliches auf konstruktiv einfache und somit kostengünstige Art und Weise möglich. Ein automatisierter Betrieb kann somit verhältnismäßig einfach erfindungsgemäß realisierbar sein.

Die besondere konstruktive Einfachheit wird erfindungsgemäß dadurch zusätzlich erreicht dass die Justageführung in einem gegenüber der senkrechten abwärts gerichteten Winkel so angeordnet ist, dass der darauf laufende Strang zumindest dort, d.h. im Bereich der Justageführung, unter Einfluss der Schwerkraft ohne weitere Bewegungsmittel, d.h. insbesondere ohne weitere Strangzuführvorrichtungen, wie etwa Bandförderern oder unter Einfluss eines Förderfluids, (nur) unter Einfluss der Schwerkraft ohne weitere Bewegungsmittel der Einzugsrolle zugeführt ist.

Eine besondere Anpassbarkeit ist konstruktiv verwirklicht, wenn bei der erfindungsgemäßen Vorrichtung die Neigung der Justageführung und die Neigung der Strangzuführvorrichtung getrennt voneinander einstellbar sind, bevorzugt sogar unabhängig voneinander einstellbar sind.

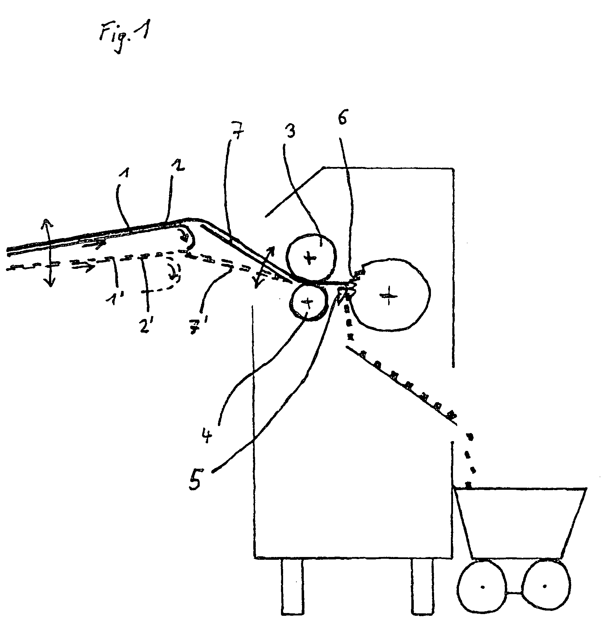

Die Erfindung wird im Folgenden anhand der einzigen Figur 1 mit der dort beispielhaft dargestellten Ausführungsform näher erläutert werden.

Figur 1 zeigt eine schematische Seitenansicht einer erfindungsgemäßen Vorrichtung zum Granulieren zumindest eines Strangs 1, 1' von zu granulierendem Material. Die erfindungsgemäße Vorrichtung kann dabei insbesondere für jedes für eine Granulierung geeignetes Material Verwendung finden.

Die Vorrichtung weist eine Schneidevorrichtung mit zwei gegeneinander bewegbaren Klingen 5, 6, zwei Einzugsrollen 3, 4 und einer Strangzuführvorrichtung 2, 2' zum Zuführen des Strangs 1, 1' zu der Schneidevorrichtung auf. Nach der Strangzuführvorrichtung 2, 2' ist im Bereich unmittelbar vor den Einzugsrollen 3, 4 und an diese angrenzend eine zusätzliche in ihrer Neigung verstellbare und relativ zur Strangzuführvorrichtung 2, 2' bewegbare laschenförmige Justageführung 7, 7' erfindungsgemäß angeordnet. Mittels dieser Justageführung 7, 7' kann der Winkel, unter welchem der Strang 1, 1' der Einzugsrolle 3, 4 zugeführt ist, eingestellt werden. Zwei verschiedene Winkelstellungen sind dabei in Figur 1 zu sehen. Die mit durchgezogenen Linien dargestellte Stellung zeigt eine größere Neigung der Justageführung 7 und einen entsprechenden Verlauf des Strangs 1 sowie eine angepasst eingestellte Lage der Strangzuführvorrichtung 2. Die gestrichelt dargestellte Lage der Justageführung 7' zeigt einen flacheren Winkel mit entsprechender Führung des Strangs 1' sowie einer entsprechend angepassten Lage der Strangzuführvorrichtung 2'.

Erfindungsgemäß ist die Justageführung 7, 7' gemäß Figur 1 generell in einem gegenüber der senkrechten abwärts gerichteten Winkel so angeordnet, dass der darauf laufende Strang 1, 1' zumindest im dortigen Bereich der Justageführung unter Einfluss der Schwerkraft und ohne weitere Bewegungsmittel, beispielsweise ohne zusätzliche Beförderungsbänder oder Wasserrutschen oder auch ohne sonstige Fluidbeaufschlagung den Einzugsrollen 3, 4 zugeführt wird.

Die Winkelverstellung der Justageführung 7, 7' erfolgt gemäß der in Figur 1 gezeigten Ausführungsform durch entsprechende Schwenkbewegung, um eine Drehachse im Bereich unmittelbar vor den Einzugsrollen 3, 4 bzw. unmittelbar an diese angrenzend.

Sowohl die Justageführung 7, 7' als auch die Strangzuführvorrichtung 2, 2' sind erfindungsgemäß, wie in Figur 1 gezeigt, getrennt voneinander einstellbar, wobei auch eine unabhängig voneinander vorgesehene Möglichkeit der Einstellbarkeit besteht.

Durch die erfindungsgemäße Vorrichtung kann auf konstruktiv einfache und kostengünstige Art und Weise eine besonders gute Anpassbarkeit an unterschiedliche Betriebszustände, insbesondere an unterschiedliche Strangmaterialien, erfolgen und es kann erfindungsgemäß speziell eine weitestgehende Automatisierung des Betriebs, insbesondere des Anfahrvorgangs, einer solchen Vorrichtung ermöglicht werden.

## Patentansprüche

1. Vorrichtung zum Granulieren zumindest eines Strangs (1, 1') von zu granulierendem Material, mit einer Schneidevorrichtung mit zwei gegeneinander bewegbaren Klingen (5, 6), zumindest einer Einzugsrolle (3, 4) und einer Strangzufuhrvorrichtung (2, 2') zum Zuführen des Strangs (1, 1') zu der Schneidevorrichtung, nach der Strangzufuhrvorrichtung (2, 2') im Bereich unmittelbar vor der Einzugsrolle (3, 4) und an diese angrenzend eine zusätzliche in ihrer Neigung verstellbare und relativ zur Strangzufuhrvorrichtung (2, 2') bewegbare Justageführung (7, 7') angeordnet ist, mittels welcher der Winkel, unter welchem der Strang (1, 1') der Einzugsrolle (3, 4) zugeführt ist, einstellbar ist, wobei die Justageführung (7, 7') laschenförmig ausgebildet ist und in einem gegenüber der Senkrechten abwärts gerichteten Winkel so angeordnet ist, dass der darauf laufende Strang (1, 1') zumindest dort unter Einfluss der Schwerkraft ohne weitere Bewegungsmittel der Einzugsrolle (3, 4) zugeführt ist, wobei die Justageführung (7, 7') um eine Drehachse im Bereich unmittelbar vor den Einzugsrollen schwenkbar ist, **dadurch gekennzeichnet, dass**
die Neigung der Justageführung (7, 7') und die Neigung der Strangzuführvorrichtung (2, 2') getrennt voneinander einstellbar sind.

2. Vorrichtung nach Anspruch 2, **dadurch gekennzeichnet, dass** die Neigung der Justageführung (7, 7') und die Neigung der Strangzuführvorrichtung (2, 2') unabhängig voneinander einstellbar sind.

## Claims

1. A device for pelletizing at least one strand (1, 1') of a material to be pelletized, comprising a cutting device with two blades (5, 6) moveable relative to each other, at least one feed roller (3, 4) and at least one strand feeder (2, 2') for feeding the strand (1, 1') to the cutting device, the strand feeder having an inclination, and a rectification guide arranged downstream of the strand feeder (2, 2') in a region directly in front of the feed roller (3, 4), wherein additionally an inclination of the rectification guide is adjustable and the rectification guide is moveable relative to the strand feeder such that an angle at which the strand is fed to the feed roller (3,4) is adjustable, wherein the rectification guide (7, 7') is configured tap-shaped and arranged at an angle oriented downwardly relative to the vertical such that the strand (1, 1') moving on the rectification guide is fed at least there under gravitational influence without further moving parts to the feed roller, wherein the rectification guide (7, 7') is pivotable around a rotation axis in the region immediately upstream of the feed rollers, **characterized in that** the inclination of the rectification guide (7, 7') and the inclination of the strand feeder (2, 2') are adjustable separately from one another.

2. The device according to claim 1, **characterized in that** the inclination of the rectification guide (7, 7') and the inclination of the strand feeder (2, 2') are adjustable independently from one another.

## Revendications

1. Dispositif de granulation d'au moins un boyau (1, 1') de matière à granuler, comprenant un dispositif de coupe doté de deux lames (5, 6) mobiles l'une contre l'autre, au moins un cylindre d'insertion (3,4) et un dispositif d'amenée de boyau (2, 2') destiné à amener le boyau (1, 1') jusqu'au dispositif de coupe, en aval du dispositif d'amenée de boyau (2, 2'), dans la zone située directement en amont du cylindre d'insertion (3,4) et agencé, de façon adjacente à celui-ci, un guidage d'ajustage (7, 7') supplémentaire réglable en inclinaison, qui peut se déplacer par rapport au dispositif d'amenée de boyau (2, 2') et grâce auquel l'angle suivant lequel le boyau (1, 1') est amené au cylindre d'insertion (3,4) est réglable, le guidage d'ajustage (7, 7') se présentant sous la forme d'une languette et étant agencé dans un angle orienté vers le bas par rapport à la verticale de sorte que le boyau (1, 1') qui s'y déploie soit amené au moins à cet endroit sous l'influence de la gravité sans autres moyens d'entraînement du cylindre d'insertion (3,4), le guidage d'ajustage (7, 7') pouvant pivoter autour d'un axe de rotation dans la zone située directement en amont du cylindre d'insertion (3, 4), **caractérisé en ce que**
l'inclinaison du guidage d'ajustage (7, 7') et l'inclinaison du dispositif d'amenée du boyau (2, 2') sont réglables séparément l'une de l'autre.

2. Dispositif selon la revendication 2, **caractérisé en ce que** l'inclinaison du guidage d'ajustage (7, 7') et l'inclinaison du dispositif d'amenée du boyau (2, 2') sont réglables indépendamment l'une de l'autre.
